Europäisches Patentamt

European Patent Office

Office européen des brevets

(11) Publication number: **0 466 264 A1**

# EUROPEAN PATENT APPLICATION

(21) Application number: **91201734.0**

(22) Date of filing: **04.07.91**

(51) Int. Cl.⁵: **H02B 1/16**, F16B 43/00, H01R 4/64

(30) Priority: **09.07.90 IT 2146090 U**
**19.06.91 IT 166991**

(43) Date of publication of application:
**15.01.92 Bulletin 92/03**

(84) Designated Contracting States:
**AT BE CH DE DK ES FR GB GR IT LI LU NL SE**

(71) Applicant: **S.I.F.E. SOCIETA' ITALIANA**
**FORNITURE ELETTRICHE S.p.A.**
**Via Teglio 11**
**Milano(IT)**

(72) Inventor: **Balzanelli, Vincenzo**
**V. Marco Antonio Colonna 27**
**Milano(IT)**

(74) Representative: **Raimondi, Alfredo, Dott. Ing.**
**Prof. et al**
**Dott. Ing. Prof. RAIMONDI ALFREDO S.r.l.**
**Piazzale Cadorna 15**
**I-20123 Milano(IT)**

(54) **Earthing device especially for protective panels of containers for electrical equipment.**

(57) Earthing device, especially for containers of electrical equipment, comprising, in combination, electrical connection means (14) supported by an insulating body (13, 113) and adapted for bringing into connection the surfaces of at least one electrically conducting support element (3) of the container and at least one protective panel (10) for the electrical equipment, under the compressive action exerted by means (11, 111) for fixing and pulling said panel (10) to said support element (3) of the container, said insulating body (13, 113) being also adapted for remaining fixed to, but not in engagement with, said fixing and pulling means (11, 111) for the purpose of creating a reciprocal holding action adapted for preventing itself from falling and the fixing means (10) from falling consequent upon the operation of disconnecting the panel.

Fig.5

The subject of the present Invention is a device for earthing protective panels, especially in cubicles or boards containing electrical equipment.

It is known that cubicles and/or boards (panels) carrying electrical equipment must be earthed; in order to guarantee the safety of the user, especially in cubicles and the like of recent construction, which have structures of the modular type comprising several sectors, at front and/or back, covered by panels, each of which can protect the electrical equipment, the problem arises of discharging to earth each protective panel, which is assembled independently of the others.

In the known art, many earthing devices have been designed and constructed, based upon the connection between the individual panels and one or more uprights of the cubicles, by means of lengths of cable intended to be fixed at their ends to said panel and upright respectively.

This type of solution, however, has disadvantages, in that it requires the use of many additional pieces, such as lengths of electric cable, end fittings, nuts and bolts, to be supplied together with the cubicle and to be assembled when the cubicle is set up; moreover, with such devices it is necessary to provide, on the covering panels or blind doors, stud bolts to which the ends of the earthing cables are to be attached by nuts, with an obvious increase in the costs of manufacture and the possibility of forgetfulness or omissions by the erectors in making the connection to earth.

The technical problem arises of creating an earthing device for protective panels in cubicles and the like containing electrical equipment, which shall be easy to use, highly reliable, made up of a reduced number of components, and which shall be able to make use, for said connection, of elements that form part of the cubicle and are necessary for the assembling of same, in order to reduce the possibility of errors or omissions in making the earth connections by the user at the assembly stage.

A further objective of the present invention is to create an earthing device for containers, adapted for preventing accidental disconnection of the various component elements during the dismantling and re-assembling operations necessary for maintenance and inspection.

These results are achieved by the present invention, which provides an earthing device especially for containers of electrical equipment, comprising electrical connection means, supported by insulating means and adapted for bringing into connection the surfaces of at least one conducting support element of the container and at least one protective panel of the electrical equipment, under the compressive action exerted by means for fixing and pulling said panel to said support element of the container, said insulating body being also adapted for remaining attached to, but not in engagement with, said fixing and pulling means for the purpose of creating a reciprocal holding action, adapted for preventing both itself from falling and also the fixing means from falling as a consequence of the operation of disconnecting the panel.

According to the present invention, said electrical connection means are preferably composed of an annular body, open by means of an axial cut in its surface, provided with a ragged front edge with points adapted for cutting into and through an insulating layer that may be applied to said protective panel, coming into contact with the conducting material and actuating the electrical connection, while said insulating support means are composed of a substantially beaker-shaped body, having a base diameter slightly larger than the diameter of the conducting annular body, in the base wall of which are formed a central hole and a series of slots connected to said hole, to constitute elastically deformable sectors.

It is furthermore provided that, in the earthing device, said tensioning means shall preferably be composed of a screw adapted for engaging with a nut integral with the support element of the container, said screw being the fixing screw itself for the protective panel of the electrical equipment and being formed of a threaded portion of diameter greater than and a smooth cylindrical portion of diameter less than the diameter of said central hole of the insulating body.

In particular, it is provided that said cylindrical body shall have bases with plane annular edges, adapted for keeping the surface of the protective panel plane even under the pulling effect of the fixing screw, thus avoiding deformations of said panel.

Further details will be found from the following description, with reference to the attached drawings, in which there are shown:

in Figure 1: an exploded schematic view of a cubicle of known type, to which the device according to this invention may be applied;

in Figure 2: an exploded view of a first form of embodiment of the earthing device according to the present invention;

in Figure 3: a section of assembled panel, with the earthing device of Fig. 2 fitted to it;

in Figure 4: an exploded view of a second form of embodiment of the earthing device according to this invention, and in Figure 5: a section of assembled panel, with the earthing device of Fig. 3 fitted to it.

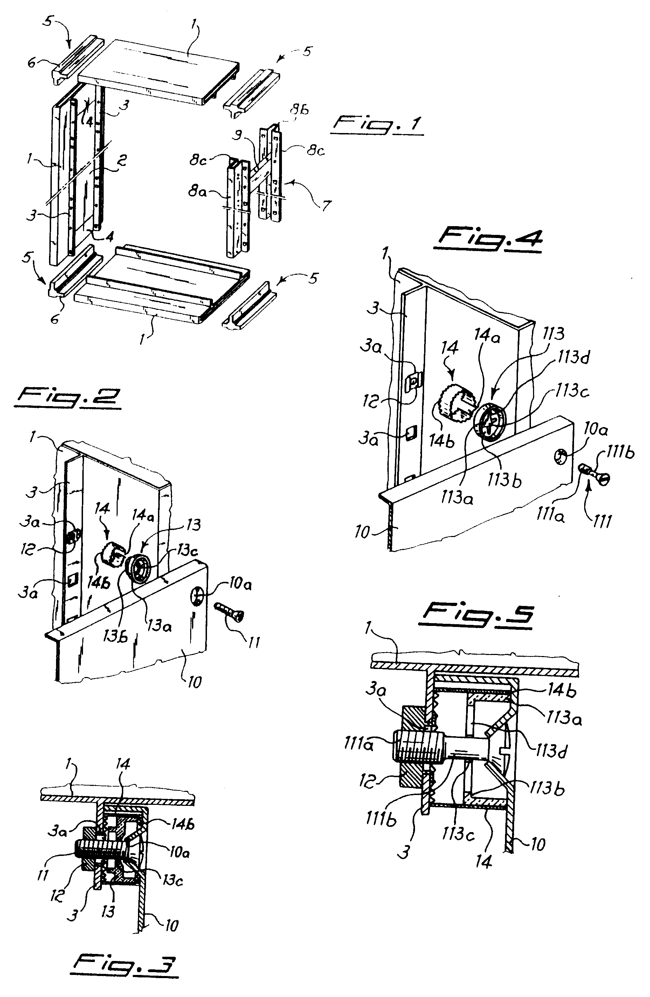

Referring to Figure 1, a container for electrical equipment of known type is composed of profiled elements 1 of uniform section and width but different lengths, adapted for forming the sides and top of the container; said section having a general asymmetrical box-like shape with an opening 2 towards the inside of the container, bounded by two fins 3, bent at 90° relative to the profile and extending over its entire length.

The profiled elements 1 are completed by two further shaped elements 4, each disposed at one end of the profiled element 1.

As shown as an example in Fig. 1, the coupling together of the various profiled elements is achieved by means of joints, generally referenced 5, which in the case of the connection between side and top of Fig. 1 will have an angular shape 6.

In particular, in the case where the container is extended in the horizontal direction, it is possible to insert a transverse frame 7 which, when the extension has been made, becomes an internal partition which must be open to allow passage of the cabling to and from the equipment items present in the container on opposite sides of this partition; it is, therefore, constructed of two U-section uprights 8a and 8b respectively, with bent fins 8c for fixing, with stiffening transverse members 9 contained between said uprights, at various heights.

Once the assembling of the cubicle has been completed and the electrical equipment items disposed on their individual supports, in known manner and therefore not illustrated in the figures, a protective panel 10 is fitted by means of a fixing screw 11 which, passing through the hole 10a, engages into a female screw composed of a cage nut 12, inserted into appropriate holes 3a formed on the fins 3 of the profiles 1, in this way achieving complete assembly of the cubicle, with protective closure of the electrical equipment mounted on the individual supports.

However, before the described fixing of the panel 10 and for the purpose of achieving earthing of the individual panels, two elements are inserted between the panel 10 itself and the profile 3, one being an insulator 13 and one a conductor 14.

In greater detail, and according to a first form of embodiment illustrated in Figures 2 and 3, the insulating element 13 is constituted of a body made basically of a first cylinder 13a, to which is connected a second cylinder 13b having a base diameter smaller than that of the cylinder 13a; the insulating element 13 furthermore has a through hole 13c, adapted for permitting passage of the fixing screw 11, to which it remains attached even when the latter is disengaged from the nut 12, thus holding the screw inserted in the hole 10a and preventing it from falling out when it is unscrewed.

The conducting element 14 is, on the other hand, constituted of an annular body, open by means of an axial slot 14a formed on its surface, and having front edges provided with serrations or a jagged arrangement, having sharp points 14b, which make the real earth connection, as will become apparent from the description of Fig. 3 given below.

As may be noted, in fact, once the conducting annular body 14 has been fitted onto the insulating element 13 and the fixing screw 11 has been inserted through the holes 10a and 13c until it engages the nut 12, the subsequent tightening up of the nut 11 causes a compression of the conducting element 14 between the internal surfaces of the profile 3 and of the panel 10, which compression brings the points 14b of the serrated edge to cut into both surfaces, in this way achieving, at the side towards the panel 10, penetration also through the insulating layer composed of the varnish of this panel, and consequent bringing into connection of the panel 10 and the profile 3.

In this way the connection to earth of the panel itself is achieved.

It should be noted that the configuration described here of the insulating element 13 enables the panel 10 to be maintained perfectly in its plane even under the pressure force exerted by the tightened screw 11 to achieve cutting into the panel itself by the wall of the conductor 14.

As illustrated in Figures 4 and 5, the present invention provides also a second form of embodiment of the earthing device, according to which the insulating body 113 is constituted of a beaker-shaped body 113a, in the base wall 113b of which, of reduced thickness, there is formed a central hole 113c, having a diameter slightly smaller than the diameter of the threaded zone 111a of the blocking screw 111, which latter possesses, in this case, a smooth cylindrical shank zone 111b, separating the head of the screw from the threaded zone, and having a diameter smaller than the base diameter of the threaded zone 111b.

To said central hole 113, there are connected slots 113d, formed in the wall 113b and disposed, for example, at 90° from one another, so as to divide the wall 113b into elastically deformable, solid sectors, adapted for bending when the threaded zone 111a, having a larger diameter than the hole 113c, is introduced into this hole, and for bending back into position once, the threaded zone 111a having passed through, the hole is again in correspondence with the smooth cylindrical shank 111b of smaller diameter than itself.

In this way, as illustrated in Fig. 5, the threaded zone 111a engages with the single nut 12 and, at the instant of dismantling of the panel, the operator can freely unscrew the screw, which offers a certain resistance until it is disengaged from the nut 12, then revolving freely, but this free rotation does not, however, cause the insulating ring 113 with associated toothed ring 14 to fall out, because the smooth cylindrical shank 111b does not engage with the hole 113c and does not allow the insulating body to be released by mistake from the screw, to which it remains firmly attached, thus creating a reciprocal holding action, which in turn prevents the screw from falling out of the hole 10a.

It will therefore be evident how much the operations of dismantling and re-assembling the panel 10 are greatly facilitated, with automatic restoration of earthing.

**Claims**

1. Earthing device, especially for containers of electrical equipment, characterized in that it comprises, in combination, electrical connection means (14), supported by an insulating body (13, 113), and adapted for bringing into connection the surfaces of at least one conducting support element (3) of the container and at least one protective panel (10) for the electrical equipment, under the compressive action exerted by means (11, 111) for fixing and pulling said panel (10) onto said support element (3) of the container, said insulating body (13, 113) being also adapted for remaining attached to, but not in engagement with, said fixing and pulling means (11, 111), for the purpose of creating a reciprocal holding action adapted for preventing both itself from falling and the fixing means (10) from falling as a consequence of the operation of disconnecting the panel.

2. Earthing device, especially for containers of electrical equipment, according to Claim 1, characterized in that said electrical connection means are preferably constituted of an annular body (14), open by means of an axial slot (14a) in its surface, and provided at its front, jagged edge with points (14b), adapted for cutting into and through an insulating layer that may have been applied to said protective panel (10), thus coming into contact with the conducting material and making the electrical connection.

3. Earthing device, especially for containers of electrical equipment, according to Claim 1, characterized by the fact that said insulating support means are constituted of a substantially cylindrical body (13) having a base diameter slightly larger than the diameter of the conducting annular body (14) and provided with an axial through hole (13c).

4. Earthing device, especially for containers of electrical equipment, according to Claim 1, characterized by the fact that said insulating support means are constituted of a substantially beaker-shaped body (113) having a base diameter slightly larger than the diameter of the conducting annular body (14), and in the base wall (113b) of which are formed a central hole (113c) and a series of slots (113d) connected to said hole, to form elastically deformable sectors.

5. Earthing device, especially for containers of electrical equipment, according to Claim 1, characterized by the fact that said pulling or tightening means are preferably constitued of a screw (11, 111) adapted for engaging with a nut (12) fixed to the support element (3) of the container, said screw (11, 111) being the same screw for fixing the protective panel of the electrical equipment and being preferably formed of a threaded zone (111a) of diameter larger than said hole (113c), and of a smooth cylindrical shank zone (111b) of diameter smaller than the diameter of said central hole (113c) of the insulating body (113).

6. Earthing device, especially for containers of electrical equipment, according to Claim 1, characterized by the fact that said insulating body (13, 113) has bases with plane annular edges, adapted for maintaining the surface of the protective panel in a plane, even under the pulling effect of the fixing screw, thus avoiding deformations of said panel.

_Fig.1_

_Fig.2_

_Fig.4_

_Fig.5_

_Fig.3_

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | GB-A-2 213 328 (ROGER FURSIER) August 9, 1989 <br> * page 3, line 22 - line 36 * <br> --- | 1 | H02B1/16 <br> F16B43/00 <br> H01R4/64 |
| A | DESIGN ENGENEERING <br> October 1985, LONDON <br> pages 93 - 97; <br> KEITH REYNOLDS: 'EARTHING FOR SAFETY & PERFORMANCE ' <br> * the whole document * <br> --- | 1 | |
| A | US-A-2 006 525 (BERNHARD THAI) July 2, 1935 <br> * page 2, line 48 - line 69 * <br> --- | 2 | |
| A | DE-U-8 515 918 (ROBERT BOSCH GMBH) November 6, 1986 <br> * page 2 * <br> ----- | 1 | |

TECHNICAL FIELDS SEARCHED (Int. Cl.5 )

H02B
F16B
H01R
H05K

The present search report has been drawn up for all claims

| Place of search | Date of completion of the search | Examiner |
|---|---|---|
| THE HAGUE | 11 OCTOBER 1991 | TOUSSAINT |

EPO FORM 1503 03.82 (P0401)